Europäisches Patentamt

European Patent Office

Office européen des brevets

(19)

(11) EP 0 924 907 A2

(12) EUROPEAN PATENT APPLICATION

(43) Date of publication:
23.06.1999 Bulletin 1999/25

(51) Int Cl.⁶: H04L 25/49

(21) Application number: 98309082.0

(22) Date of filing: 05.11.1998

(84) Designated Contracting States:
AT BE CH CY DE DK ES FI FR GB GR IE IT LI LU
MC NL PT SE
Designated Extension States:
AL LT LV MK RO SI

(30) Priority: 16.12.1997 US 991324

(71) Applicant: NCR INTERNATIONAL INC.
Dayton, Ohio 45479 (US)

(72) Inventor: DiBenne, Joseph T., II
Oceanside, CA 92057 (US)

(74) Representative: Irish, Vivien Elizabeth et al
International IP Department,
NCR Limited,
206 Marylebone Road
London NW1 6LY (GB)

(54) **Multiplexed transmission using PAM**

(57) A high speed quaternary bit stream encoded serial data link for transmitting data is disclosed. Serial digital data streams are multiplexed together and encoded using a pulse amplitude modulated encoder to increase the data throughput of the data link.

## FIG. 1

EP 0 924 907 A2

## Description

This invention relates in general to computer input/output (I/O) device interfaces, and in particular to a computer I/O data link.

A communications or I/O bus is typically used in computer systems to interconnect separate devices, such as peripheral devices from a CPU. A number of problems are associated with such interconnections, for example, level conversion, impedance matching, and synchronization.

The requirements for high speed data input/output (I/O) interface designs are increasing dramatically in the computer businesses. Currently, systems are being developed with I/O link speeds in excess of 1 gigabit/second (Gbps) for a single signal I/O. The next generation of data link products will require I/O links to be greater than 2 Gbps, and possibly up to 4 or 8 Gbps.

This requirement of higher speeds has, previously, assumed that a parallel transmission or an optical data link would be used to increase the speed of data transmission. These approaches are inherently limited by the number of lines that can be connected from one computer to another, as well as by the electrical-optical-electrical conversion required by optical data transmission. Further, the parallel and optical approaches are cost prohibitive.

It is the object of the invention to provide a high speed data link that uses serial data transmission.

According to the invention a system for transmitting data, characterized by:

> a pulse amplitude modulated encoder for pulse amplitude modulated encoding data to be transmitted;
> a transmitter, coupled to the pulse amplitude modulated encoder, for transmitting data on a transmission line;
> a receiver, coupled to the transmitter and pulse amplitude modulated encoder by the transmission line, for receiving the pulse amplitude modulated encoded data from the pulse amplitude modulated encoder and the transmitter; and
> a pulse amplitude modulated decoder, coupled to the receiver, for decoding the pulse amplitude modulated encoded data.

Also according to the invention a method for transmitting data, characterized by the steps of:

> modulating a data stream with a pulse amplitude modulated encoder;
> transmitting the pulse amplitude modulated data stream on a transmission line;
> receiving the pulse amplitude modulated data stream at a receiver coupled to the transmission line; and
> decoding the pulse amplitude modulated data stream to generate an output data stream.

The invention will now be described by way of example with reference to the accompanying drawings in which:-

> FIG. 1 is a diagram of a transmission link for Pulse Amplitude Modulated (PAM) encoding and decoding;
> FIG. 2 is Quaternary PAM encoding block diagram;
> FIG. 3 shows a logic table for the PAM encoder;
> FIG. 4 is a graph showing PAM data encoding;
> FIG. 5 shows a output signal from a differential amplifier;
> FIG. 6 shows a PAM encoded signal output;
> FIG. 7 shows a Fast Fourier Transform (FFT) of the digital signal of FIG. 5;
> FIG. 8 shows a Fast Fourier Transform (FFT) of the PAM signal of FIG. 7; and
> FIG. 9 shows a flow chart showing the steps of the present invention.

## Overview

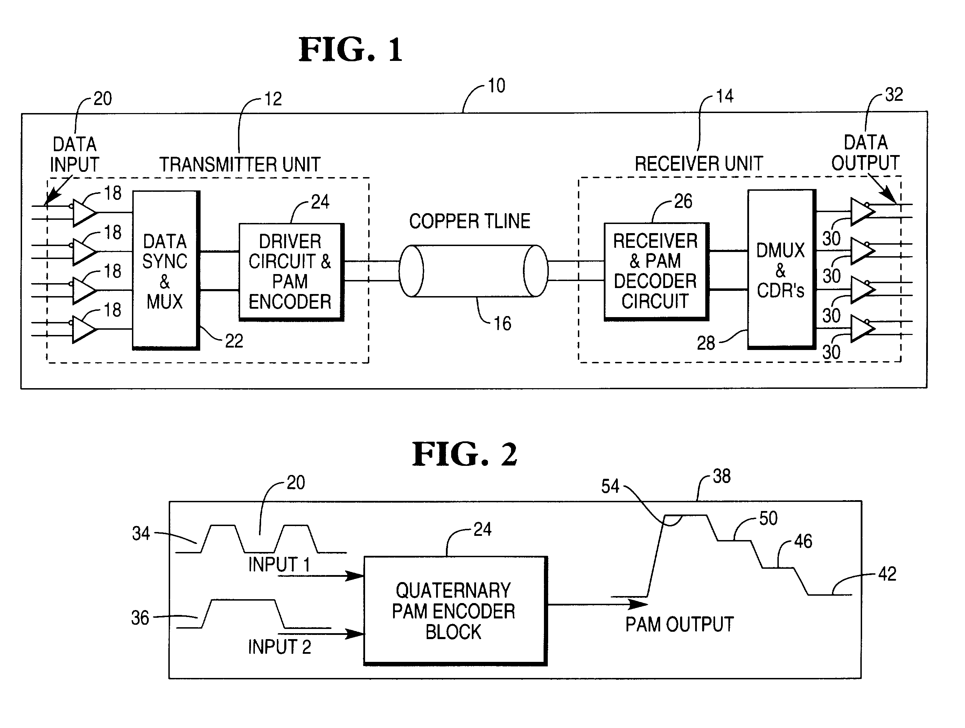

FIG. 1 is a diagram of a transmission link for Pulse Amplitude Modulated (PAM) encoding and decoding. Transmission link 10 contains transmitter 12, receiver 14, and transmission line 16.

Within transmitter 12, there are differential input amplifiers (buffers) 18 to receive input data 20, a data synchronizer and multiplexer (Data Sync and MUX) 22, and a driver circuit and PAM encoder 24. Within receiver 14, there is a receiver and PAM decoder 26, a demultiplexer 28, and differential drivers 30. The differential drivers produce data output 32.

The driver circuit and PAM encoder 24 design is intended to operate within an integrated circuit device and a system 10 configuration to allow multiple 1 Gb/s data inputs 20 to be multiplexed by the Data Sync and MUX 22 and encoded by driver circuit and PAM encoder 24 for data transmission across transmission line 16. Transmission line 16 is typically a copper based links, but can be optical or other transmission line 16.

As shown in FIG. 1, four 1 Gb/s data input signals 20 are multiplexed by the data sync and MUX 22, encoded by driver circuit and PAM encoder 24, and then transmitted through the transmission line 16.

The signal is then recovered at the receiver 14, decoded by the PAM decoder circuit 26, demultiplexed by the demultiplexer 28 and then re-transmitted by the differential drivers 30.

## Quaternary PAM Encoding

FIG. 2 is Quaternary PAM encoding block diagram. As shown in FIG. 2, two of the data inputs 20 are encoded by PAM encoder 24. Input 1 34 and input 2 36 are digital signals with binary levels, typically "0" for the low level and "1" for the high level of the signal.

PAM encoder 24 is shown as a quaternary encoder, meaning that there are four levels to the output signal 38; however, there can be fewer or greater numbers of levels to the output signal 38.

As PAM encoder 24 encodes the data input signals 20, it generates a multi-level output signal 38; depending on the encoding scheme used, a high level on input 1 34 will generate a high level on output signal 38. The PAM encoder typically takes serial data inputs, such as data inputs 20, and encodes them with a modulated source.

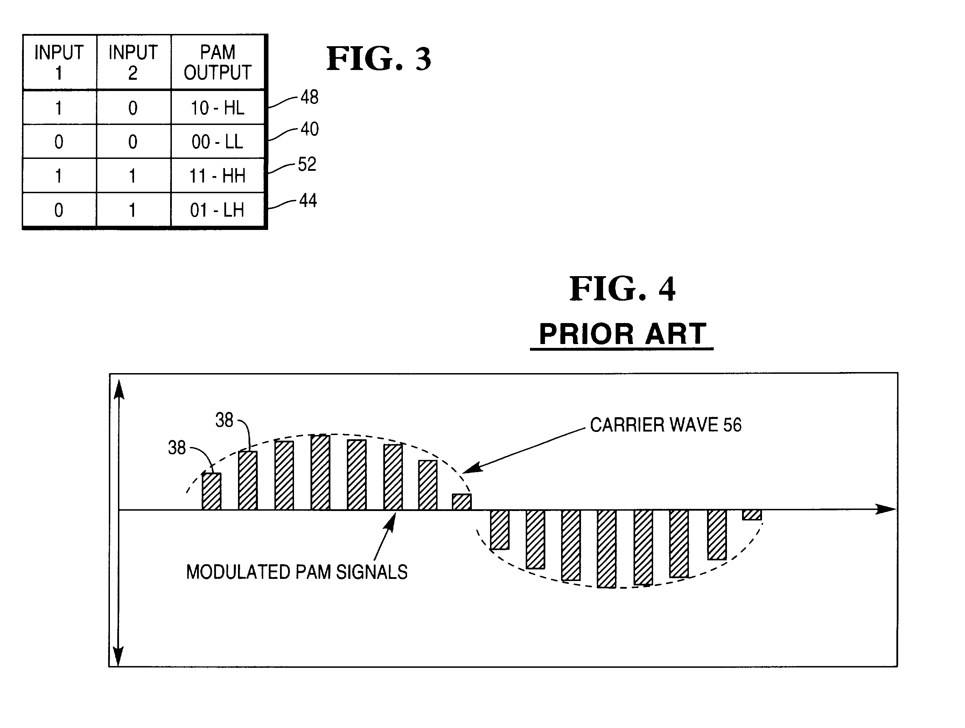

FIG. 3 shows a logic table for the PAM encoder. When input 1 34 is low (0), and input 2 36 is low (0), the PAM output 38 is 00, or "Low-Low." This output is shown in row 40 on FIG. 3, which corresponds to level 42 on FIG. 2.

When input 1 34 is low (0), and input 2 36 is high (1), the PAM output 38 is 01, or "Low-High." This output is shown in row 44 on FIG. 3, which corresponds to level 46 on FIG. 2.

When input 1 34 is high (1), and input 2 36 is low (0), the PAM output 38 is 10, or "High-Low." This output is shown in row 48 on FIG. 3, which corresponds to level 50 on FIG. 2.

When input 1 34 is high (1), and input 2 36 is high (1), the PAM output 38 is 11, or "High-High." This output is shown in row 52 on FIG. 3, which corresponds to level 54 on FIG. 2.

Since the input signals are encoded into an quaternary PAM scheme, there are four different states (quaternary) which represent the input signals. Every pulse in the output 38 represents two bits of data rather than one for a digital signal. Twice the amount data can be transferred in the same time-space the digital signal occupies. Other encoding schemes are envisioned, e. g., six different states, eight different states, etc., to further increase the data throughput.

FIG. 4 is a graph showing typical PAM data encoding as used in the prior art. Typically, the PAM encoded output 36 would be mixed with a carrier wave 56 before being transmitted on transmission line 16. This technique would require a local oscillator as part of the driver circuit and PAM encoder 24 and an external signal generator to generate the carrier wave 56 to carry out the transmission of the data.

However, in the present invention, the output 38 is not mixed with a carrier wave 56. The transmitted signal for the present invention is shown in FIG. 2 as output 38. The PAM encoding scheme of the present invention is derived for high speed digital communications and uses no other external signals for modulation. In addition, no carrier wave 56 is generated.

The receiver 14 decodes the output signal 38 based upon the threshold levels for each level 42, 46, 50, and 54, and re-constructs the digital codes from threshold detected signals. Not only is the method of encoding as used in the present invention simpler than the conventional method shown in FIG. 4, but the present invention is also simpler to decode since no feedback circuitry, e.g., a phase-locked loop is needed to extract the PAM data signals 38.

Data Output

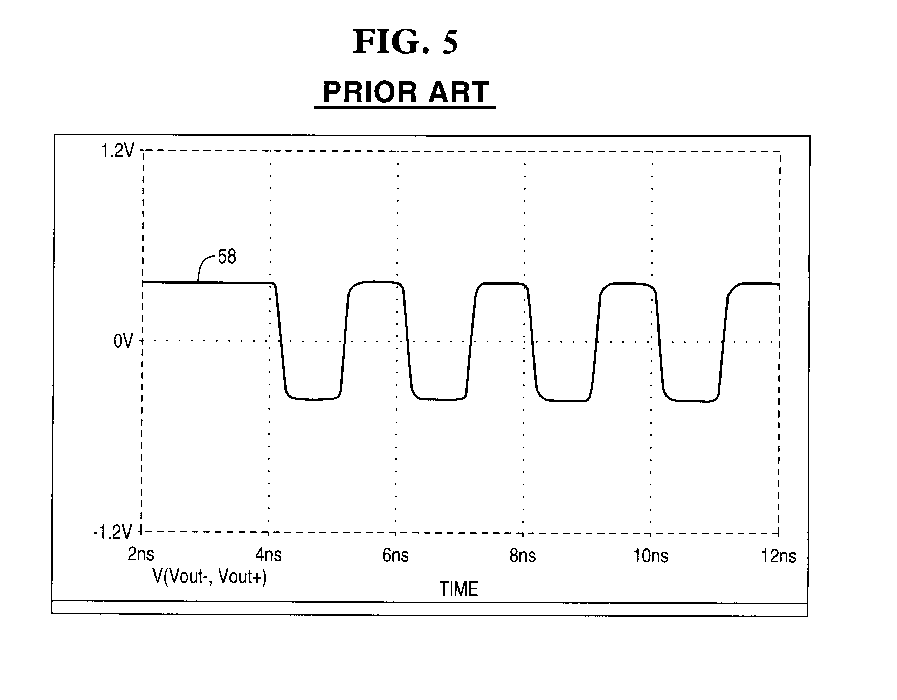

FIG. 5 shows a output signal from a differential amplifier as used in the prior art.

The output waveform 58 as shown in FIG. 5 is a one gigabit per second (1 Gb/sec) high-low pattern (10101010). Each bit is approximately 1 nanosecond (ns) wide.

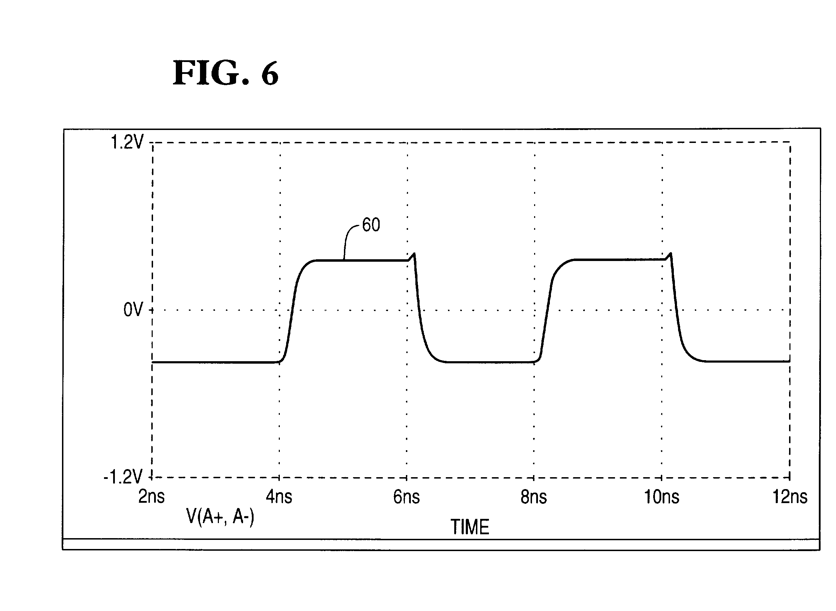

FIG. 6 shows a PAM encoded signal output as used in the present invention. The output 60 is an encoded 1 Gb/sec signal in a 10011001 pattern.

If a 1 Gb/s signal 58 is transmitted on a differential amplifier down a loose transmission line (like a copper cable) the signal 58 will be attenuated due to both skin-effect losses and conductance losses. Losses due to skin-effect are a result of current crowding near the surface of the conductor at higher frequencies. The region in which this current resides is called the skin-depth, designated L. The smaller the value for L, the more the signal will be attenuated. L is given by the equation:

$$\delta = \frac{1}{\sqrt{\pi f \mu \sigma_0}}$$

where: f is the frequency

T is the permeability of the material, and
[ sigma is the conductivity of the material.

For copper, the permeability is $4X \times 10^{-7}$ henry/meter, and the conductivity is $5.8 \times 10^7$ mhos/meter.

As is apparent from the equation, the skin-depth decreases with increasing frequency *f*. Thus, the higher the frequency of the signal, the larger the attenuation of the signal. A 1 Gb/s digital signal has a fundamental analog frequency of 500 MHz and a pulse width of 1 ns as shown in FIG. 5. The fundamental frequency will usually dictate the pulse amplitude of the signal when it is received at the end of the loose transmission line.

However, for the same data rate (with a 10011001 data pattern), a quaternary PAM encoded signal has a fundamental analog frequency of 250 MHz and a pulsewidth of 2 ns as shown in FIG. 6. A different bit pattern was chosen for FIG. 6 because it is difficult to correlate a PAM data signal to a digital waveform. The pattern (10011001) was chosen for output 60 to illustrate the bandwidth conversion ability with the PAM encoding method of the present invention.

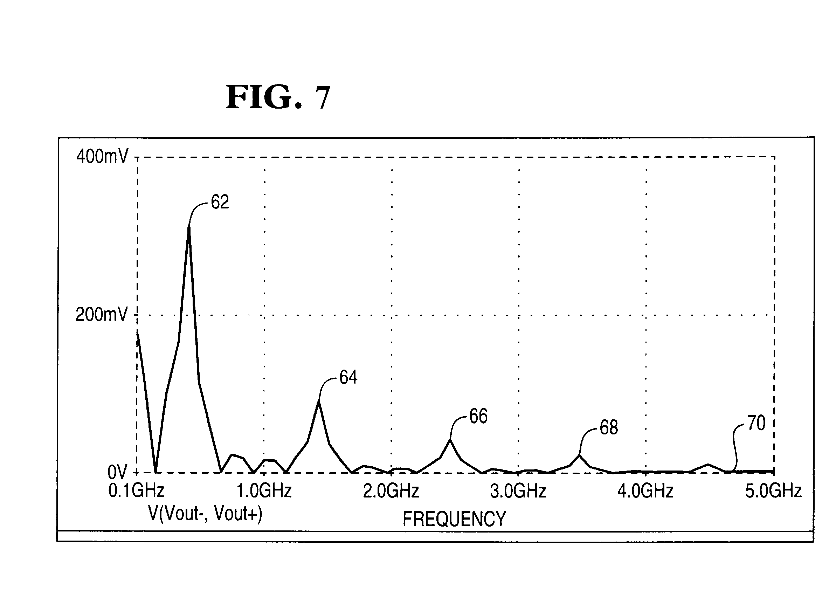

FIG. 7 shows a Fast Fourier Transform (FFT) of the digital signal of FIG. 5. Major spectral components 62, 64, 66, and 68 of the FFT 70 show that several components, e.g., components 64, 66, and 68, are above the 1.5 GHz frequency level, and components 66 and 68 are above the 2.5 GHz level. Further, the fundamental frequency, component 62 of the FFT 70, is at 500 MHz.

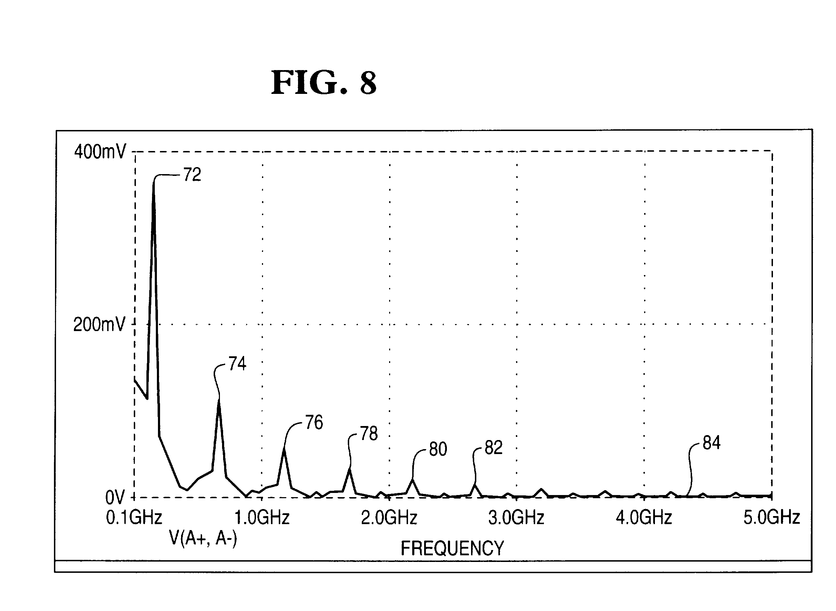

FIG. 8 shows a Fast Fourier Transform (FFT) of the PAM signal of FIG. 6. Major spectral components 72, 74, 76, 78, 80, and 82 of the FFT 84 show that the majority of the spectral components, e.g., components 72, 74, and 76, are below the 1.5 GHz frequency level, in sharp contrast to the FFT 70 of FIG. 7. Further, only component 82 is above the 2.5 GHz level, as opposed to components 66 and 68 of the FFT 70 of FIG. 7. The fundamental frequency, component 72 of FFT 84, is much lower in frequency than the fundamental frequency of FFT 70 shown in FIG. 7.

This lowering of the fundamental frequency of the FFT 84 means that the PAM signal will have less attenuation and larger timing margins than a digital signal with the same amplitude. This allows the system designer to increase the data throughput of the system 10 system, because the designer has more bandwidth, without increasing the number of interconnects.

Although the FFT 84 will vary for different data patterns due to the data-dependent frequencies of the signals, many of the FFT 84 components will still exist for almost all data patterns. To illustrate the differences between the PAM encoding of the present invention and the digital data transmission, the same data patterns as those used in FIGS. 5 and 6 were chosen.

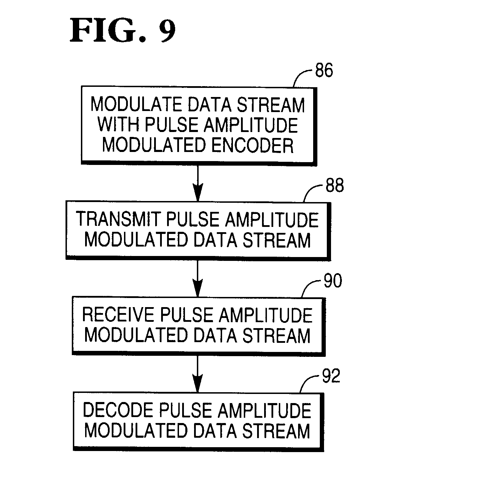

FIG. 9 is a flowchart illustrating the steps used in the present invention.

Block 86 represents the step of modulating a data stream with a pulse amplitude modulated encoder.

Block 88 represents the step of transmitting the pulse amplitude modulated data stream on a transmission line.

Block 90 represents the step of receiving the pulse amplitude modulated data stream at a receiver coupled to the transmission line.

Block 92 represents the step of decoding the pulse amplitude modulated data stream.

## Claims

1. A system for transmitting data, characterized by:

   a pulse amplitude modulated encoder (24) pulse amplitude modulated encoding data to be transmitted;
   a transmitter (12), coupled to the pulse amplitude modulated encoder, for transmitting data on a transmission line (16);
   a receiver(14), coupled to the transmitter (12) and pulse amplitude modulated encoder (24) by the transmission line(16), for receiving the pulse amplitude modulated encoded data from the pulse amplitude modulated encoder and the transmitter; and
   a pulse amplitude modulated decoder (26), coupled to the receiver (14), for decoding the pulse amplitude modulated encoded data.

2. The system of claim 1, where the pulse amplitude modulated encoder (26) encodes the data stream into a quaternary data stream.

3. The system of claim 1, further comprising a multiplexer (23) for multiplexing at least two data input streams together into a multiplexed data stream prior to pulse amplitude modulated encoding the multiplexed data stream.

4. The system of claim 3, further comprising a demultiplexer (28) for demultiplexing a received multiplexed data stream into at least two output data streams.

5. A method for transmitting data, characterized by the steps of:

   modulating (86) a data stream with a pulse amplitude modulated encoder;
   transmitting (88) the pulse amplitude modulated data stream on a transmission line;
   receiving (90) the pulse amplitude modulated data stream at a receiver coupled to the transmission line; and
   decoding (92) the pulse amplitude modulated data stream to generate an output data stream.

6. The method of claim 5, further comprising multiplexing at least two input data streams into a multiplexed input stream before the step of modulating the data stream.

7. The method of claim 6, further comprising the step of demultiplexing the received multiplexed pulse amplitude modulated data stream to generate at least two output data streams.

# FIG. 1

# FIG. 2

EP 0 924 907 A2

EP 0 924 907 A2

**FIG. 3**

| INPUT 1 | INPUT 2 | PAM OUTPUT | |
|---------|---------|------------|---|
| 1 | 0 | 10 - HL | 48 |
| 0 | 0 | 00 - LL | 40 |
| 1 | 1 | 11 - HH | 52 |
| 0 | 1 | 01 - LH | 44 |

**FIG. 4**

**PRIOR ART**

CARRIER WAVE 56

38

38

MODULATED PAM SIGNALS

# FIG. 5

## PRIOR ART

EP 0 924 907 A2

# FIG. 6

## FIG. 7

EP 0 924 907 A2

# FIG. 8

EP 0 924 907 A2

# FIG. 9

MODULATE DATA STREAM
WITH PULSE AMPLITUDE
MODULATED ENCODER — 86

TRANSMIT PULSE AMPLITUDE
MODULATED DATA STREAM — 88

RECEIVE PULSE AMPLITUDE
MODULATED DATA STREAM — 90

DECODE PULSE AMPLITUDE
MODULATED DATA STREAM — 92